# EUROPEAN PATENT SPECIFICATION

(11) **EP 1 617 728 B1**
(45) Date of publication and mention of the grant of the patent: **10.09.2008**
(21) Application number: 04759730.7
(22) Date of filing: 23.03.2004
(51) Int. Cl.: A23F 3/00, A23F 5/00, A23L 2/00, A23L 2/38, A47J 31/41

(54) **APPARATUS FOR PRODUCING A TEA BEVERAGE EMPLOYNG A CONTINUOUS MIXING CHAMBER**
VORRICHTUNG ZUR HERSTELLUNG EINES TEEGETRÄNKS UNTER VERWENDUNG EINER DAUERMISCHKAMMER
APPAREIL DE PRODUCTION D'UNE BOISSON A BASE DE THE A L'AIDE D'UNE CHAMBRE DE MELANGE EN CONTINU

(30) Priority: 01.04.2003 US 404677
(43) Date of publication of application: 25.01.2006
(73) Proprietor: Jones, Brian C., New Hartford, CT 06057 (US); Rothenberg, Paul John, Englewood Cliffs, NJ 07632 (US)
(72) Inventor: Jones, Brian C., New Hartford, CT 06057 (US); Rothenberg, Paul John, Englewood Cliffs, NJ 07632 (US)
(74) Representative: Stevens, Ian Edward
(86) International application number: PCT/US2004/008836
(87) International publication number: WO 2004/094585

(56) References cited:
- US-A- 2 907 265
- US-A1- 2002 074 350

## Description

### BACKGROUND OF THE INVENTION

Beverages formed from concentrates are enjoyed around the world. One advantage of forming a beverage from a concentrate is that only the concentrate need be shipped to the dispensing site; any available domestic water supply at the site can be used to form the bulk of the final mixed product. Another advantage in forming traditionally brewed drinks, such as tea and iced tea, from concentrate is that the time-consuming brewing process is eliminated.

There are many types of beverage making machines or appliances for forming beverages from concentrate. For example, U.S. Pat. No. 4,920,871 relates to a beverage making appliance. U.S. Pat. Nos. 4,309,939 and 4,579,048 relate to beverage brewing apparatuses. U.S. Pat. No. 5,579,678 relates to an apparatus for automatically sweetening tea. US-A-2002/0074350 discloses a mixing chamber for producing a non-carbonated tea beverage, wherein hot water, tea concentrate and cold water are distributed into the mixing chamber.

However, in the example of a tea beverage, certain detrimental microorganisms can grow in tea when the tea is held for a period of time at low tea solids concentrations and low temperatures. This has been especially evident in the food service industry where a lack of hygienic procedures in "Ready-to-Drink" tea urns can produce very high counts of various detrimental microorganisms including yeast, mold and bacteria such as coliform. Specifically, the tea is brewed in the urn and kept at ambient temperatures in large quantities until it is dispensed. The urns themselves and the (tea dispensing) valves must be sanitized on a regular basis to avoid the outgrowth of detrimental microorganisms. If there is a failure of sanitation, especially in obstructed areas such as dispensing valves, large amounts of detrimental microorganisms can subsequently be found in dispensed beverages. High temperatures can kill the detrimental microorganisms but these high temperatures can also deleteriously affect the tea flavor profile.

### SUMMARY OF THE INVENTION

The present invention relates to a mixing chamber for producing a non-carbonated tea beverage, wherein the tea beverage is susceptible to growth of detrimental microorganisms, comprising: a tea concentrate feed line having a check valve; a hot water feed line; a cold water feed line having a check valve; and wherein the non-carbonated tea beverage is better than an acceptable microbial count and is a substantially homogeneous non-carbonated tea beverage.

These and other aspects, objects and features of the present invention will become apparent from the following detailed description of the preferred embodiments, read in conjunction with, and reference to, the accompanying drawings.

### BRIEF DESCRIPTION OF THE DRAWINGS

FIG. 1 is a block diagram of a beverage dispensing system according to an embodiment of the present invention;
FIG. 2 is an isometric view of the nozzle assembly according to an embodiment of the present invention;
FIG. 3 is a sectional view of the nozzle assembly according to an embodiment of the present invention;
FIG. 4 is an exploded view of the mixing chamber assembly according to an embodiment of the present invention;
FIGS. 5A, 5B, 5C and 5D are sectional views of the mixing chamber assembly according to an embodiment of the present invention;
FIGS. 6A and 6B are sectional views of the check valve for the mixing chamber assembly according to an embodiment of the present invention;
FIGS. 7A and 7B are sectional views of the check valve for the mixing chamber assembly according to an embodiment of the present invention;
FIG. 8 is an assembly drawing showing an isometric view of a beverage dispenser according to an embodiment of the present invention;
FIG. 9 is an assembly drawing showing a side view of a beverage dispenser according to an embodiment of the present invention;
FIG. 10 is an assembly drawing showing a front view of a beverage dispenser according to an embodiment of the present invention;
FIG. 11 is a conceptual view of the exterior cladding of a beverage dispenser according to an embodiment of the present invention;
FIG. 12 is a flow chart showing a method of automatically flushing a beverage dispenser according to an embodiment of the present invention; and
FIG. 13 is a conceptual view of the exterior cladding of the beverage dispenser according to another embodiment of the present invention.

### DETAILED DESCRIPTION OF THE INVENTION

The present invention relates to a method and apparatus for producing a non-carbonated beverage (wherein the beverage is susceptible to the growth of detrimental microorganisms) by mixing at least a beverage concentrate, hot water and cold water in a mixing chamber to form a substantially homogeneous non-carbonated beverage that is better than the acceptable microbial count.

The mixing chamber of the present invention is incorporated into a beverage dispenser. The finished non-carbonated beverage looks and tastes similar to the corresponding fresh brewed beverage product, but without many of the disadvantages associated with a fresh brewed beverage making apparatus such as higher maintenance and operational costs, and susceptibility to the growth of detrimental microorganisms. In a further embodiment, the exterior of the beverage dispenser can appear to the user as the corresponding fresh brewed beverage making apparatus.

The mixing chamber of the present invention is incorporated into a beverage dispenser for iced tea. In one embodiment, the dispenser looks similar to a real leaf tea brewing urn. The mixing chamber and any associated dispensing assemblies (e.g., nozzle assembly) of the present invention sufficiently mixes, at a minimum, tea concentrate, hot water and cold water to produce a substantially homogeneous non-carbonated beverage that is better than the acceptable microbial count. One or more additives such as a liquid sweetener, aroma or other ingredients may also be fed into the mixing chamber. The finished tea beverage looks and tastes similar to the corresponding fresh brewed tea beverage, but without many of the disadvantages associated with fresh brewed beverage making apparatus such as higher maintenance and operational costs, and susceptibility to the growth of detrimental microorganisms.

For purposes of the present invention, the phrase "iced tea" refers to tea that is at or below room temperature.

For purposes of the present invention, the phrase "detrimental microorganisms" refers to microorganisms such as yeast, mold and bacteria such as coliform that are able to grow out in the specific beverage (e.g., tea) and cause spoilage and/or public health concerns.

For purposes of the present invention, the phrase "beverage concentrate" refers to a product derived from concentrated beverage extract that is then diluted with water to form a drinkable beverage. Concentrates of the present invention comprise from about 0.2 to about 40% solids.

For purposes of the present invention, the phrase "tea concentrate" refers to a product derived from concentrated tea extract that is then diluted with water to form a drinkable tea beverage. Tea concentrates of the present invention comprise from about 0.2 to about 40% tea solids.

For purposes of the present invention, the phrase "beverage" refers to a drinkable beverage prepared from beverage concentrates by dilution with water. The beverage concentrates are generally diluted with sufficient water to provide the beverage. Concentrates are typically diluted to a minimum of about 0.08% solids and, more particularly, to about 0.4% solids to provide the beverage.

For purposes of the present invention, the phrase "tea beverage" refers to a drinkable beverage prepared from tea concentrates or extracts by dilution with water. The tea concentrates or extracts are generally diluted with sufficient water to provide the tea beverage. Tea concentrates are typically diluted to a minimum of about 0.08% tea solids and, more particularly, to about 0.4% tea solids to provide the tea beverage.

For purposes of the present invention, the word "solids" refers to those solids normally present in a beverage extract.

For purposes of the present invention, the phrase "tea solids" refers to those solids normally present in a tea extract. Polyphenolic compounds are normally the primary component of tea solids. However, tea solids can also include caffeine, proteins, amino acids, minerals and carbohydrates.

For purposes of the present invention, the phrase "substantially homogeneous non-carbonated beverage" is a beverage that has a solids measurement that is within +/- 10% when measured 5 seconds after the beverage begins exiting the dispensing unit (e.g., converging nozzle) and then 30 seconds after exiting the dispensing unit.

For purposes of the present invention, the phrase "hot water" refers to water at a temperature of above about 110° F.

For purposes of the present invention, the phrase "cold water" refers to water at a temperature of at or below the temperature of the cold water domestic feed line at the location where the dispensing unit is located.

For purposes of the present invention, the phrase "better than the acceptable microbial count" refers to the measurement of the microbial count of the finished beverage that is: a) no greater than one log (i.e., factor of 10) of the aerobic plate count of the incoming cold water domestic feed line; b) no greater than one log (i.e., factor of 10) of the yeast/mold count of the incoming cold water domestic feed line and c) less than 10 per ml of the total coliform count. For purposes of this test, the finished beverage is tested after first dispensing at least one liter of beverage, then shutting off the dispensing unit and, subsequently, after at least 8 hours, starting up the unit and testing the product.

For purposes of the present invention, the "aerobic plate count" is measured by the following. Samples are serially diluted and plated on Standard Methods Agar (SMA). Dilutions are made in 9 ml aliquots of Butterfield's Buffer with 0.1% peptone. Plating is conducted using a pour plate technique. Plates are incubated at 30°C for five days. All colonies are counted.

For purposes of the present invention, the "yeast/mold count" is measured by the following. Samples are serially diluted and plated on Potato Dextrose Agar (PDA). Dilutions are made in 9 ml aliquots of Butterfield's Buffer with 0.1% peptone. Plating is conducted using a pour plate technique. Plates are incubated at 30°C for five days. Yeast and molds are visually differentiated and counted.

For purposes of the present invention, the "total coliform count" is measured by the following. Samples were serially diluted and plated on Violet Red Bile Agar (VRBA). Dilutions are made in 9 ml aliquots of Butterfield's Buffer with 0.1 % peptone. Plating is conducted using a pour plate technique with an overlay. Plates are incubated at 35°C for 24 hours. Typical colonies are counted and confirmed as Coliforms by testing for gas production in Brilliant Green Bile Broth at 35°C.

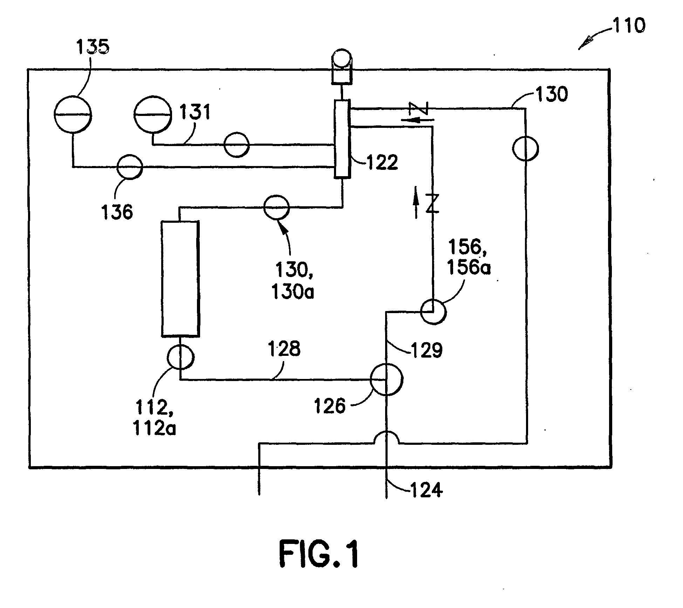

An embodiment of the present invention will now be described with reference to FIG. 1. In one embodiment, conventional beverage tubing (FDA approved for use with food products) is used to connect the components of the system. In a further embodiment, any of the beverage tubing lines may be insulated to prevent heat loss or gain. In the beverage dispenser system 110 shown in FIG. 1, a cold water domestic feed line 124 supplies water to the system 110 at typical domestic water pressures, e.g., approximately 30-50 psi. A flow splitter 126 or similar device divides the water flow to provide a hot water heater inlet 128 and a cold water inlet 129.

The flow of the hot water heater inlet 128 is controlled by a hot water heater inlet flow control valve 112 and solenoid 112a, which controls the flow of water into a water-heating tank 114. The hot water tank inlet flow control valve 112, as well as the other flow control valves in the system, can be a conventional beverage flow control valve, i.e., piston, sleeve and spring.

The tank 114 produces hot water within a predetermined range. In one embodiment, the hot water is in the range of about 140-200° F, more particularly in the range of about 175-185° F., and most particularly is about 180° F. A temperature that is too high may cause the water to boil over and to flow out of the hot water tank. Additionally, during high volume dispensing, the temperature may drop to as low as about 110° F. While this low temperature may produce a product of lesser quality, it is still sufficient to produce the mixed beverage.

In one embodiment, a heating source, such as a heating element, is employed to generate the required hot water.

The water entering the tank 114 may contain a large amount of dissolved air. As the water is heated, the dissolved air is released and large air bubbles rise to the tank outlet. The air bubbles disrupt the uniform water flow leaving the tank 114. To overcome this problem, an air ejector system may be employed.

The beverage concentrate 135 can be of any concentration ratio, with the mixing ratios of concentrate, hot water and cold water being adjusted according to the specific concentration ratio. In one embodiment, the beverage concentrate 135 is nominally a 100:1 dilution ratio based on volume, allowing storage of the highly concentrated beverage within a relatively small space. In a specific embodiment, the beverage concentrate 135 is supplied in a disposable plastic bag, which may contain two-liters of concentrate. Since the concentrate 135 is costly, it is beneficial to be able to fully evacuate the plastic bag with little or no remnant. This requires proper support of the plastic bag within the system 110. In an embodiment, the plastic bag is supported via a conventional "bag-in-box" approach. In one example, the plastic bag is hung from hooks attached to a support structure of the system, which may result in a more complete evacuation of the concentrate 135 from the plastic bag. In a further example, eyelets may be provided in the upper perimeter of the plastic bag to provide an attachment point for the hooks. In yet another example, an outlet fitting is provided at the bottom of the plastic bag, and the lower portion of plastic bag is angled to the outlet fitting. By hanging the plastic bag, gravity pulls the beverage concentrate to the outlet fitting.

In one embodiment, the concentrate 135 is transported by a pump 136 to the mixing chamber 122 where the concentrate 135 is mixed with the hot water. In an embodiment, the pump 136 is a peristaltic pump, which is capable of pumping a metered amount of water at the very low flow rates required for the beverage concentrate 135, typically less than 1 ml per second. Additionally, in a further embodiment, a "sold out" sensor detects when the plastic bag needs to be replaced.

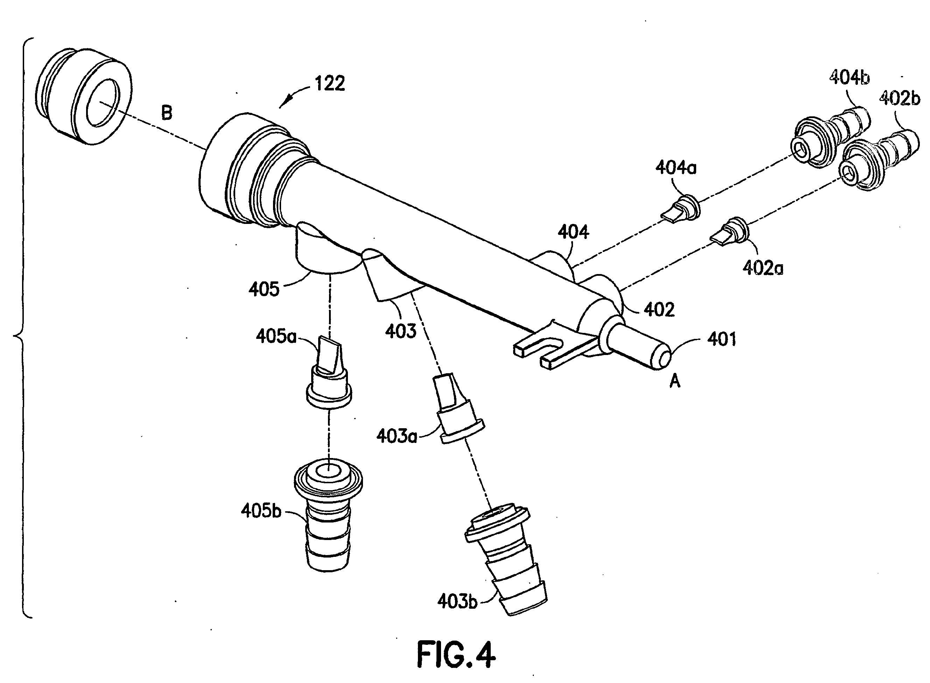

As shown in FIG. 4, the concentrate 135 and the hot water come into contact in the mixing chamber 122. Subsequently, in the mixing chamber 122, cold water is added. The cold water flow control valve 156 and solenoid 156a control the flow of the cold water. The cold water flows into the mixing chamber assembly 122 through a port 150 where it is mixed with the concentrate 135 and hot water, and the final beverage product (i.e., the substantially homogeneous non-carbonated beverage) is then dispensed through the nozzle 152.

In another embodiment, a rinse valve and corresponding solenoid allow hot water to be flushed through the mixing chamber 122.

In a further embodiment, one or more additives, such as liquid sweetener 130 and/or concentrated aroma 131, can also be added to the mixing chamber 122. The sweetener and aroma are directly introduced by individual pumps to the mixing chamber 122. In yet another embodiment, additive flow control valves and corresponding solenoids control the flow of the additives. For example, the amount of the additives can be controlled by adjusting an additive control valve. Additionally, additive adjustment knobs may be provided to allow easy adjustment of the additives amount.

In one illustrative operation, a microprocessor (not shown) on a circuit board activates the associated flow control valve solenoids, concentrate pump and additive pumps. This action starts the dispensing process.

In one specific embodiment, the beverage concentrate is a highly concentrated tea extraction. It may be mixed with water at a volume ratio of about 100:1 to achieve the optimal concentration. In order to activate certain flavor components and to effectively mix and dissolve the concentrate, this extraction should be mixed with hot water at a temperature in a range of about 140-200° F. At lower temperatures, the mixture may not remain in solution. In one example, the concentrate to hot water ratio is about 20:1 and the hot water/concentrate mixture to cold water ratio is about 4:1. Thus, the resulting beverage mixture will have a constituent ratio of cold water, hot water and concentrate of about 80:20:1.

The present invention is not limited to the exact configuration shown in FIG. 1. For example, when producing a brewed iced tea beverage, the additive, such as a liquid sweetener, is an optional item and is not required for producing the final brewed iced tea beverage. Additionally, an "on-demand" additive function can be employed where the additive flow control valve and solenoid are controlled by the user pressing a button. This operation allows the user to choose whether to use the additive, for example, to choose whether sweetened or unsweetened tea is to be dispensed. Additional additives can also be provided, if desired.

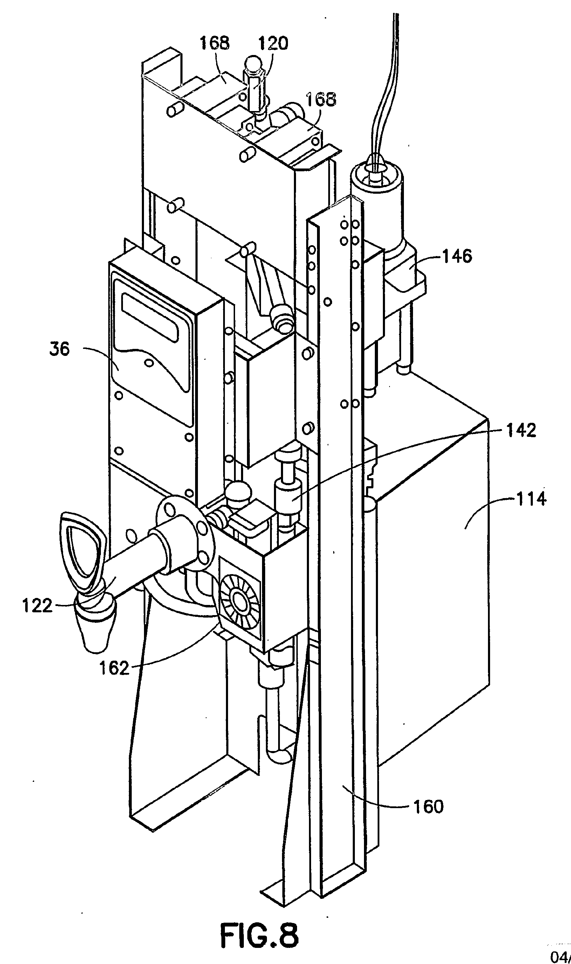

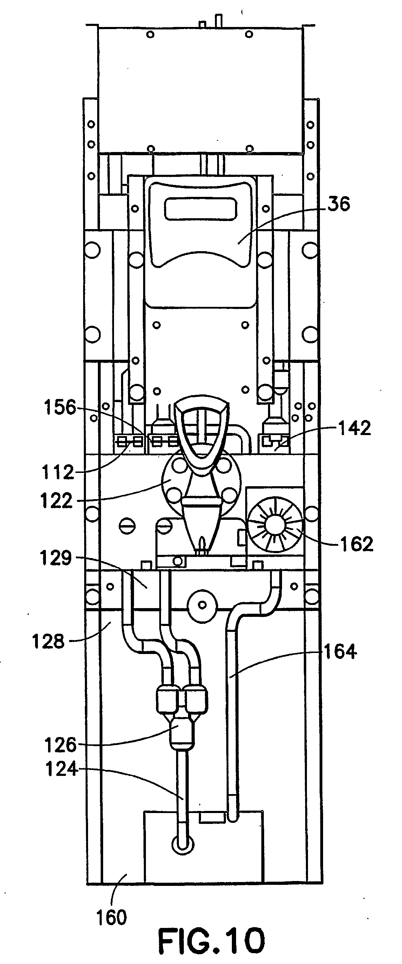

FIGS. 8, 9 and 10 show assembly views of one operational embodiment of a beverage dispensing system according to the present invention. In these drawings, like reference numerals represent the same elements as in the other figures. A support structure 160 is provided for mounting the individual elements.

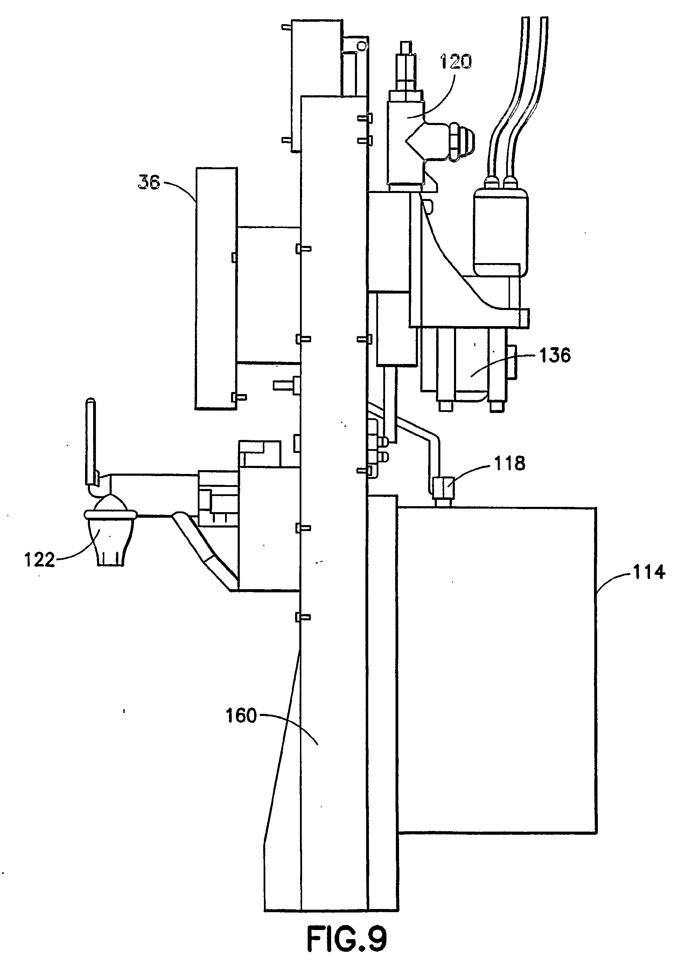

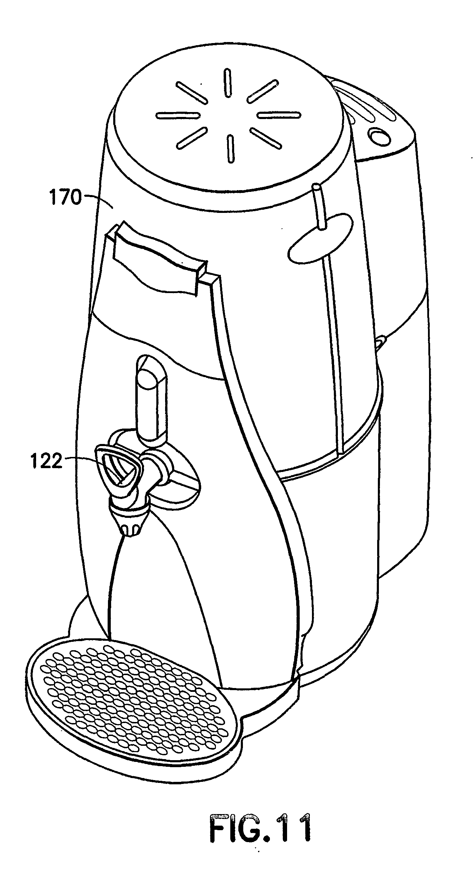

FIG. 11 shows a conceptual design of exterior cladding 170 that provides the appearance of a real leaf tea brewer, but which is actually a post-mix system according to the present invention. The exterior cladding 170 is attached to the support structure 160 (FIGS. 8 and 9).

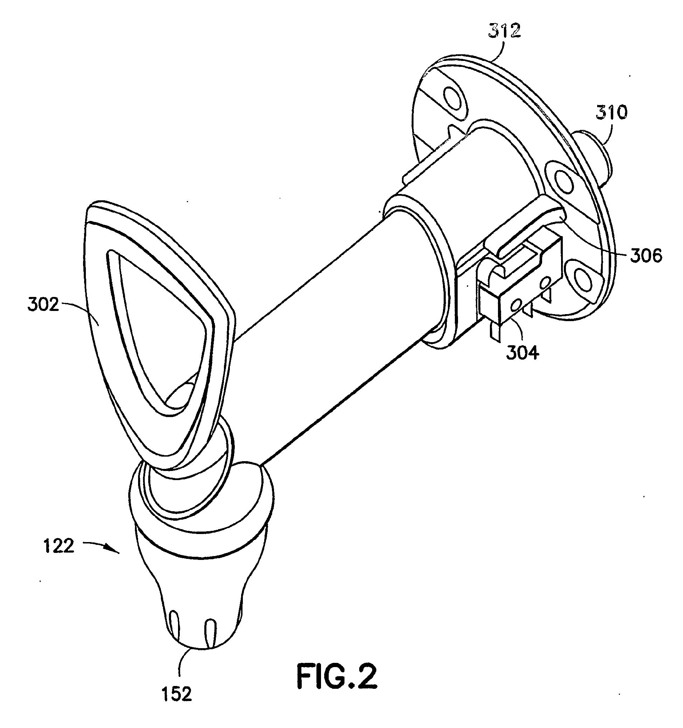

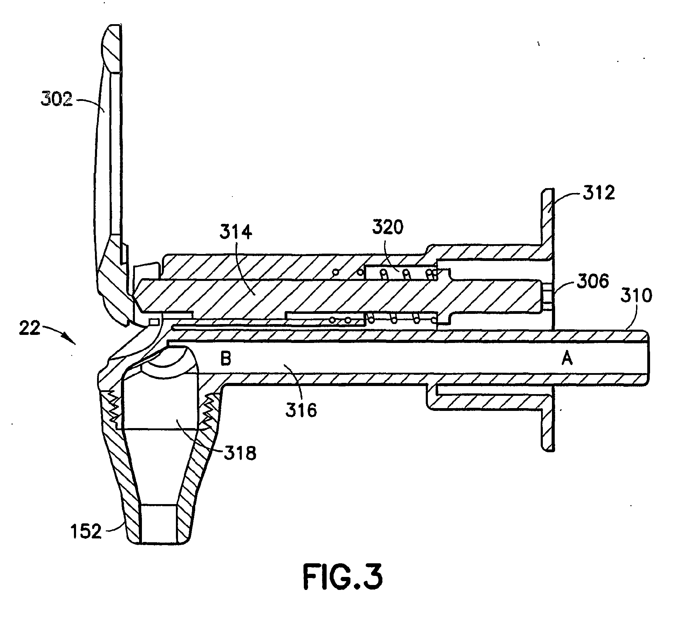

FIGS. 2 and 3 show isometric and sectional views of one embodiment of the nozzle assembly. In these figures, like reference numbers illustrate the same items. In one embodiment shown in FIGS. 2 and 3, the nozzle assembly includes a lever 302, a nozzle 152, a microswitch 304, a switch depressor 306, a substantially homogeneous non-carbonated beverage inlet 310 and a mounting flange 312. The user initiates the flow of beverage product by pulling on the lever 302. The lever 302 is linked to a pull rod 314 that activates the microswitch 304 with the switch depressor 306. The lever 302 is returned to the resting position by a biasing device or spring 320. The microswitch 304 is mounted to the rear of the nozzle assembly and, in one embodiment, is hidden from the user.

In a further embodiment, closure of the microswitch 304 creates an input to the microprocessor (not shown) on a circuit board 36 that in turn activates the associated flow control valve solenoids, concentrate pump and additive pumps. This action starts the dispensing process. In another embodiment, the microswitch 304 can directly activate the associated flow control valve solenoids, concentrate pump and additive pumps to start the dispensing process.

In yet another embodiment, operating the lever 302 activates the microswitch 304. The microprocessor opens hot water valve 130 via solenoid 130a (see FIG. 1) and operates the pump 136 to provide hot water and concentrate to the mixing chamber 122. The microprocessor also opens the cold water flow control valve 156 via solenoid 156a to provide cold water and, if necessary, one or more additive pumps to provide additive(s) (e.g., aroma, sweetener) to the mixing chamber 122. The components are mixed in the mixing chamber 122 and further mixed in the nozzle assembly where the final product is dispensed through the converging nozzle 152 as a substantially homogeneous non-carbonated beverage. When the lever 302 is returned to its resting position, the microswitch 304 is opened and the microprocessor signals the solenoids to close the flow control valves. The operation described above terminates the flow from the nozzle 152 as soon as the lever 302 is returned to the resting position. Also, the operation of valve and pump activation and de-activation may be timed to make adjustments that could improve the homogeneity of the dispensed tea product.

In yet another embodiment, as shown in FIG. 3, at the exit B of the nozzle assembly, the beverage solution empties into the nozzle chamber 318, where the flow direction is changed from horizontal to downward. The change in flow direction may further enhance mixing. In one example, a converging nozzle 152 is threaded onto the nozzle chamber 318. Flow is directed through the converging nozzle 152 and into a cup or pitcher of the user. In yet another embodiment, the converging nozzle 152 may have internal flow vanes (not shown) to help straighten the flow and minimize splashing. In one specific embodiment, the converging nozzle 152 is threaded onto the nozzle chamber 318 such that the threads are not exposed to the beverage product, making the system easier to clean.

In a further embodiment, the nozzle assembly of the present invention may be constructed so that it is aesthetically appealing and looks like a "real" dispensing spigot, provides additional mixing of the beverage and is drainable and cleanable with hot water to reduce the growth of detrimental microorganisms. In one example, the nozzle assembly is molded as one integral plastic part composed of a plastic that is FDA approved for use with food products. In yet another embodiment, the plastic may be molded with an antibacterial agent (for example, Microban^{™}) mixed with the plastic resin to discourage the growth of detrimental microorganisms on the internal and external surfaces.

FIGS. 4, 5A - 5C, 6A - 6B and 7A - 7B are exploded and sectional views of one embodiment of the mixing chamber of the present invention. It is understood that other configurations of the mixing chamber of the present invention may be employed so long as they provide a substantially homogeneous non-carbonated beverage having a microbial count which is better than acceptable values.

In the exploded view of one embodiment of the mixing chamber 122, as shown in FIG. 4, five inlet feed lines are shown: a hot water feed line 401, a beverage concentrate feed line 402 with a corresponding check valve 402a; a cold water feed line 403 with a corresponding check valve 403a; an aroma feed line 404 with a corresponding check valve 404a and a sweetener feed line 405 with a corresponding check valve 405a. In another embodiment, as shown in FIG. 4, the beverage concentrate feed line 402, the cold water feed line 403, the aroma feed line 404 and the sweetener feed line 405 have corresponding devices 402B, 403B, 404B and 405B such as inlet barbs to connect the piping of these components directly to the mixing chamber 122. These connections may be separate units attached to the mixing chamber or, in the alternative, may be integral with the mixing chamber (e.g., molded as one plastic piece).

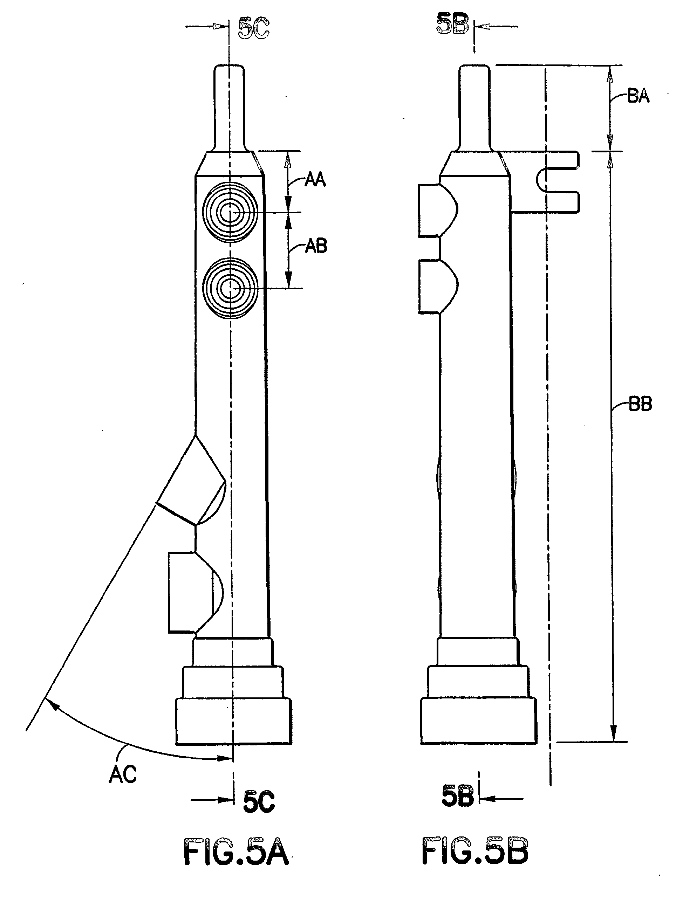

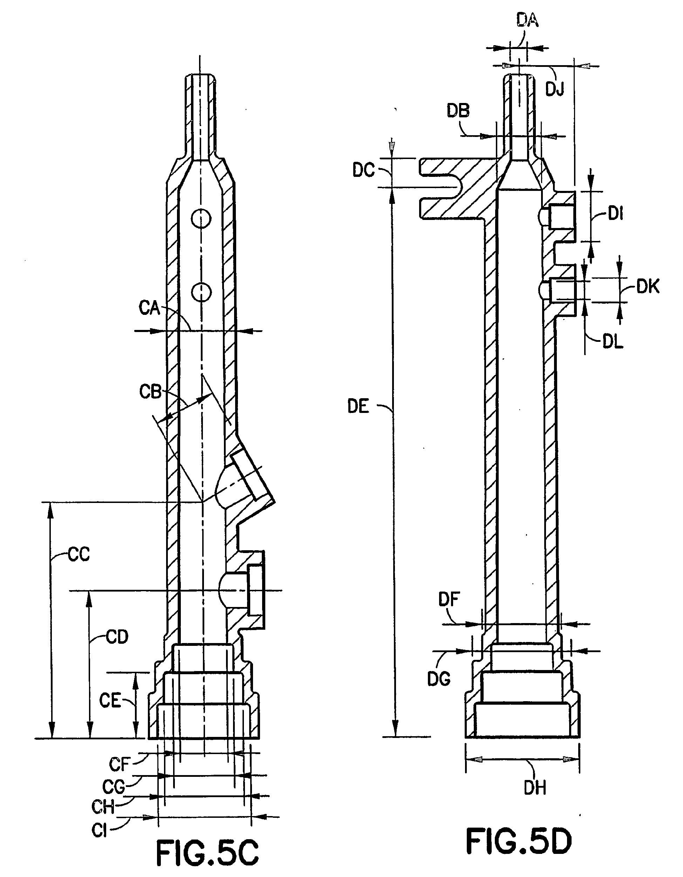

FIGS. 4, 5A, 5B and 5C show one embodiment of the overall configuration of the mixing chamber 122 where the hot water feed line 401 is located at entrance A. Continuing from entrance A to exit B, the beverage concentrate feed line 402 is located closest to the hot water feed line 401 as shown in FIGS. 4, 5A and 5B. Then, in the case of tea, the tea aroma feed line 403 is located further downstream as shown in FIGS. 4, 5A and 5B. Following the aroma feed line is the cold water feed line 404 that is angled in the flow direction as shown in FIGS. 4, 5A and 5C. Finally, if an additional additive is required, as in the case of "sweetened" tea, the sweetener feed line is located closest to exit B.

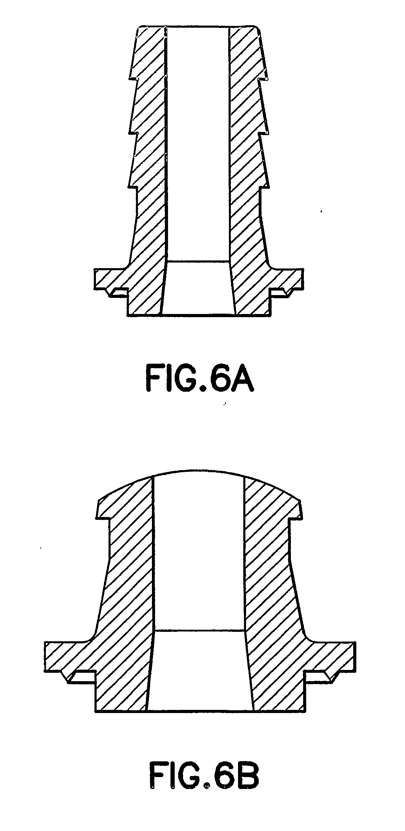

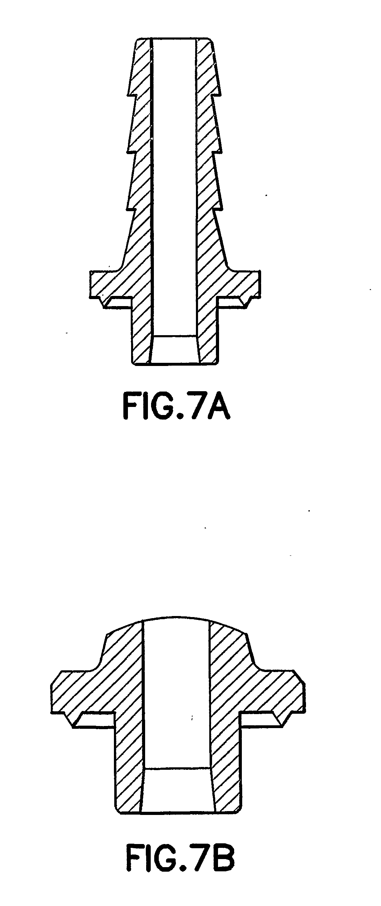

FIGS. 5A - 5D, 6A - 6B and 7A - 7B are scale drawings of one embodiment of the present invention showing dimensions (unless otherwise specified, all dimensions are in inches) of each component of the mixing chamber. The following are the dimensions shown in FIG. 5A: AA is 0.5, AB is 0.625, and the angle AC is 30 degrees. The following are the dimensions shown in FIG. 5B: BA is 0.7 and BB is 4.875. FIG. 5C is section B-B of FIG. 5B and shows the following dimensions: CA is 1 degree, CB is 0.543, CC is 2.0, CD is 1.25, CE is 0.561, CF is 0.38, CG is 0.50, CH is 0.67 and CI is 0.77. The following are the dimensions shown in FIG. 5D: DA is 0.13, DB is 0.352 and DC is 0.243. FIG. 6A is the scale drawing of the inlet barb of the cold water and sweetener inlet feed lines and FIG. 6B is the scale drawing of detail B of FIG. 6A with a scale of 6:1. FIG. 7A is the scale drawing of the inlet barb of the beverage concentrate aroma inlet feed lines and FIG. 7B is the scale drawing of detail B from FIG. 7A with a scale of 6:1.

In yet another embodiment, check valves 402a, 403a, 404a and 405a are designed to substantially prevent the backflow of beverage into any of the feed lines. Such check valves include, but are not limited to, "rubber duckbill" valves. In yet a further embodiment, a second check valve may be located in the piping that goes to the cold water feed line 403 of the mixing chamber so as to further substantially prevent backflow and minimize the growth of detrimental microorganisms in the cold water feed line.

In one example, the mixing chamber is molded as one integral plastic part composed of a plastic that is FDA approved for use with food products. In yet another embodiment, the plastic may be molded with an antibacterial agent (for example, Microban^{™}) mixed with the plastic resin to discourage the growth of detrimental microorganisms on the internal and external surfaces.

The length of the mixing chamber 122 is adjusted to provide a desired residence time for at least the hot and cold water and concentrate. In one embodiment, the desired residence time is within the range of about 0 to about 2 seconds, and is more particularly about 0.5 seconds. Although the mixing chamber 122 (as shown in one embodiment in FIGS. 4 and 5A -5C) does not include the nozzle assembly (as exemplified in FIGS. 2 and 3), the actual residence time for the components, and the overall mixing required to produce a substantially homogeneous non-carbonated beverage, is determined by the combination of both the mixing chamber 122 and the nozzle assembly. As stated above, a "substantially homogeneous non-carbonated beverage" is determined by analyzing the final beverage product at the exit point of the dispensing machine (e.g., after the converging nozzle).

In the example of a tea beverage, tea concentrate and hot water are mixed in the mixing chamber with a metered quantity of cold water to produce the finished tea beverage. The cold water reduces the temperature of the final product to a temperature that is similar in temperature to the iced tea product dispensed from leaf tea brewers. In one embodiment, the temperature of the dispensed tea product is within the range of about 60-100° F., and more particularly within the range of about 70-90° F. In a further example, the dispensed tea product may be delivered to a cup or pitcher containing ice to produce an iced tea beverage. In yet another example, a sweetened tea option is also provided, where a liquid sweetener (the additive) is added to the mixing chamber.

In addition to the detailed discussion above relating to the mix chamber and nozzle assembly designs, the beverage dispensing system according to the present invention may also include other microbiological control features to minimize the growth of detrimental microorganisms. For example, in additional embodiments, the present invention minimizes the growth of detrimental microorganisms by providing 1) a self-cleaning function for flushing the internal flow passages with hot water and/or 2) an automatic drain function to drain the internal flow passages during a prolonged period of non-use.

In one specific embodiment, the operating temperature from the hot water tank of about 160-180° F is hot enough to lower the growth of detrimental microorganisms to a level better than the acceptable microbial count. Thus, hot water from the corresponding tank is available to flush through the mix chamber, nozzle assembly and associated tubing. In one example, the internal plumbing is designed to accommodate flushing of these internal passages using appropriate tees and solenoid valves. In yet another embodiment, the hot water flush procedure is performed, either manually or automatically, at predetermined time intervals, (e.g., at least once a day). The flush sequence results in the internal passages being subjected to high temperatures for sufficient duration to lower the growth of detrimental microorganisms to a level better than the acceptable microbial count (e.g., greater than 170° F for 30 seconds).

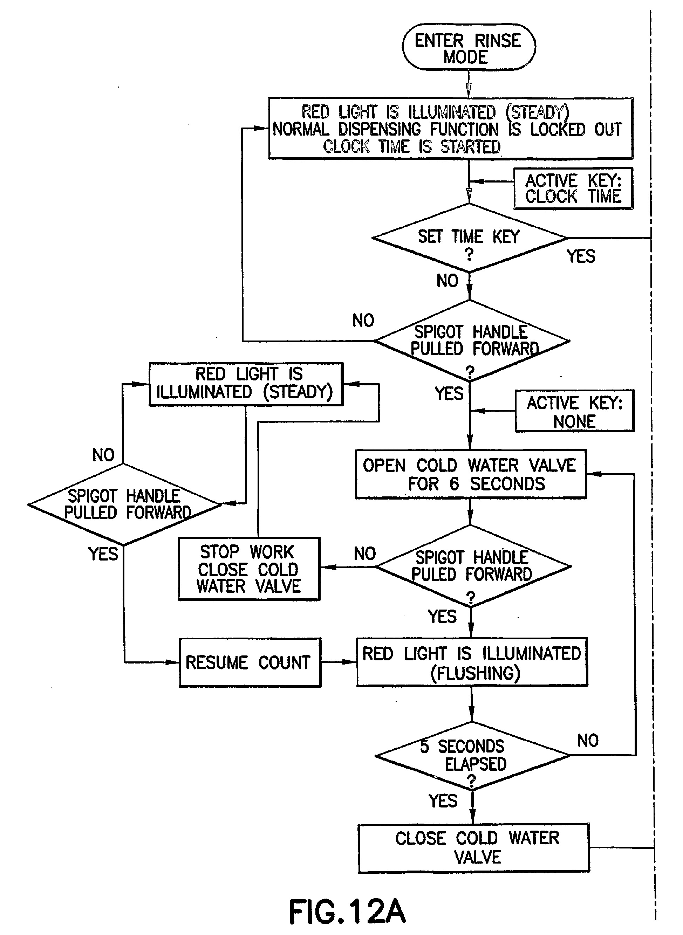

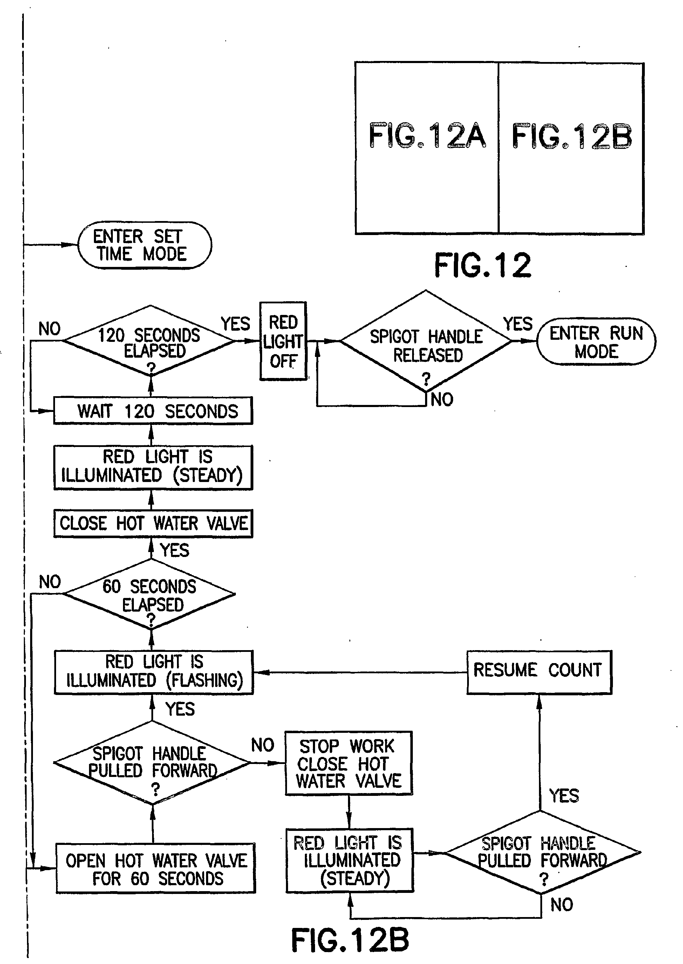

FIG. 12 is a flow chart showing logic for performing the flushing method described above. The process enters the Rinse Cycle in Step S702. In Step S703, a cold water flush is activated for a specified time. Subsequently, in Step S703, a hot water flush is activated for a specified time. In Step S705, the hot water is maintained in the system for a specified time. Finally, in Step S706, the hot water is drained from the system.

In yet another embodiment, the system may have a "sleep" feature that drains the system of the present invention. In one example, water is drained through the system for a predetermined time. This feature empties the mixing chamber assembly 122 and the nozzle assembly, thereby inhibiting the growth of detrimental microorganisms along the surfaces of the internal passages.

The disclosed beverage system provides a brewed iced tea product through its hot brewing step by mixing tea concentrate with hot water, cold water and optional liquid additives. This process results in a substantially homogeneous non-carbonated tea beverage that looks and tastes similar to fresh brewed tea. There is minimal storage of mixed tea product in the system's internal passages which are self-cleanable using available hot water. These features make the system much less susceptible to detrimental microrganisms.

In yet further embodiments, one or more programmable microprocessors provide intelligent control of the system. These microprocessors may be used to control the dispensing function (i.e., valve operation, pump operation, temperature control, etc.), monitor system status such as water temperature, number of drinks dispensed, out of product sensors (concentrate and additive), activate a periodic hot water flush (discussed below) and provide service diagnostics or the ability to remotely poll the electronic status.

In one particular embodiment, the beverage dispensing system is employed to produce a brewed iced tea beverage product. In one example, dispensing flow rates of about 2.5 ounces (about 74 ml) per second provide the look of iced tea dispensing from a real leaf tea brewer. In a further example, the system can use about 0.50 ounce (about 15 ml) per second of hot water, about 2.0 ounces (about 59 ml) per second of cold water and about 0.03 ounce (about 1 ml) per second of concentrate. If an additive is also used, then the amount of cold water may be reduced accordingly.

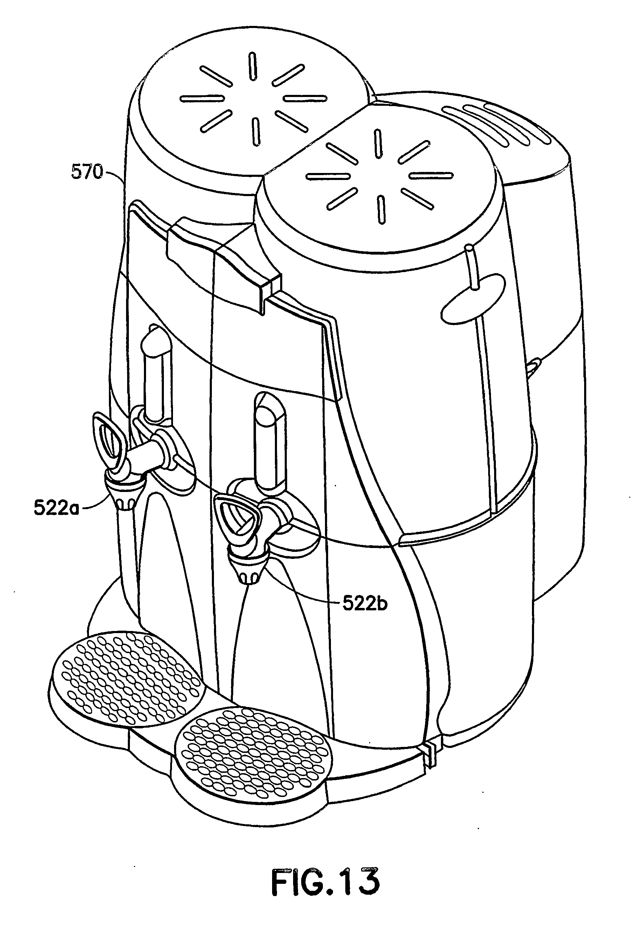

In a further embodiment, the present invention relates to an iced tea dispenser that looks and operates like a dual spigot real leaf tea brewing urn, but which is actually a post mix dispenser that instantaneously mixes and dispenses tea concentrates, hot water, and cold water. An additive, such as a liquid sweetener, may also be mixed and dispensed with the other elements. One spigot can be used to dispense a sweetened product, while the other spigot can dispense an unsweetened product. Additionally, the exterior of the dispenser appears to the user as a real leaf tea brewer with two side-by-side urns. FIG. 13 illustrates one embodiment of such a system where two beverage dispensing systems may also be provided together, where one system produces sweetened tea including the liquid sweetener additive and the other system produces unsweetened tea without the additive. A dual-spigot dispenser incorporating this concept in an integral apparatus is shown in FIG. 13.

FIG. 13 shows an embodiment where the conceptual design of exterior cladding 570 provides the appearance of a real leaf tea brewer but which is actually a post-mix system according to the present invention. The exterior cladding 570 is attached to support structure similar to that shown in FIGS. 8-10.

The individual components of the present invention described herein are not limited to application in beverage dispensing systems. For example, the mixing chamber may be utilized in any dispensing machine involving two or more liquid feed inlets where one desires a substantially homogeneous end-product and one that is better than an acceptable microbial count.

The present invention may be used with computer hardware that performs the processing and implementing functions. As will be appreciated by those skilled in the art, the systems, methods and procedures described herein can be embodied in or with a programmable computer, computer executable software or digital circuitry. The software can be stored on computer readable media, for example, on a floppy disk, RAM, ROM, a hard disk, removable media, flash memory, memory sticks, optical media, magnetooptical media, CD-ROMs, etc. The digital circuitry can include integrated circuits, gate arrays, building block logic, field programmable gate arrays (FPGA), etc.

Although specific embodiments of the present invention have been described above in detail, it will be understood that this description is merely for purposes of illustration. Various modifications of the disclosed aspects of the preferred embodiments, in addition to those described above, may be made by those skilled in the art without departing from the scope of the present invention defined in the following claims.

## Claims

1. A mixing chamber (122) for producing a non-carbonated tea beverage, wherein the tea beverage is susceptible to growth of detrimental microorganisms, comprising:
a tea concentrate feed line (402),
a hot water feed line (401),
a cold water feed line (403) having a check valve (403a), **characterised in that** said tea concentrate feed line has a check valve (402a),
wherein the non-carbonated tea beverage has a better than an acceptable microbial count and is a substantially homogeneous non-carbonated tea beverage.

2. The mixing chamber of claim 1, further comprising:
an aroma feed line having a check valve.

3. The mixing chamber of claim 1, further comprising:
a sweetener feed line having a check valve.

4. The mixing chamber of claim 1, wherein the mixing chamber has a length such that a residence time of hot water in the mixing chamber, from the hot water feed line, is between about 0.1 and about 1.5 seconds.

5. The mixing chamber of claim 4, wherein the hot water has an overall residence time in the mixing chamber and a subsequent nozzle assembly ofbetween about 0.5 seconds and about 2 seconds.

6. A tea beverage dispensing machine the mixing chamber of claim 1.

7. The mixing chamber of claim 1, further comprising a second check valve in piping that goes to the cold water feed line.

## Patentansprüche

1. Mischkammer (122) zur Herstellung eines nicht-kohlensäurehaltigen Teegetränks, wobei das Teegetränk für das Wachstum schädlicher Mikroorganismen anfällig ist, umfassend:
eine Teekonzentrat-Zufuhrleitung (402);
eine Heißwasser-Zufuhrleitung (401);
eine Kaltwasser-Zufuhrleitung (403) mit einem Rückschlagventil (403a),
**dadurch gekennzeichnet, dass** die Teekonzentrat-Zufuhrleitung ein Rückschlagventil (402a) aufweist, wobei das nicht-kohlensäurehaltige Teegetränk eine Mikrobenzahl, die besser als annehmbar ist, aufweist und ein im Wesentlichen homogenes, nicht-kohlensäurehaltiges Teegetränk ist.

2. Mischkammer nach Anspruch 1, ferner umfassend eine Aroma-Zufuhrleitung mit einem Rückschlagventil.

3. Mischkammer nach Anspruch 1, ferner umfassend eine Süßstoff-Zufuhrleitung mit einem Rückschlagventil.

4. Mischkammer nach Anspruch 1, wobei die Mischkammer eine derartige Länge aufweist, dass die Verweilzeit von Heißwasser in der Mischkammer aus der Heißwasser-Zufuhrleitung zwischen etwa 0,1 und etwa 1,5 Sekunden beträgt.

5. Mischkammer nach Anspruch 4, wobei das Heißwasser in der Mischkammer und in einer darauf folgenden Düsenanordnung eine Gesamtverweilzeit von zwischen etwa 0,5 Sekunden und etwa 2 Sekunden hat.

6. Teegetränk-Abgabevorrichtung, umfassend die Mischkammer nach Anspruch 1.

7. Mischkammer nach Anspruch 1, ferner umfassend ein zweites Rückschlagventil in der zur Kaltwasser-Zufuhrleitung führenden Rohrleitung.

## Revendications

1. Chambre de mélange (122) pour la production d'une boisson à base de thé non gazeuse, la boisson à base de thé étant susceptible de permettre le développement de microorganismes néfastes, comprenant :
une conduite d'alimentation en concentré de thé (402),
une conduite d'alimentation en eau chaude (401),
une conduite d'alimentation en eau froide (403) comportant une soupape anti-retour (403a), **caractérisée en ce que** ladite conduite d'alimentation en concentré de thé comporte une soupape anti-retour (402a),
la boisson à base de thé non gazeuse présentant un compte microbien meilleur qu'un compte microbien acceptable et étant une boisson à base de thé non gazeuse sensiblement homogène.

2. Chambre de mélange selon la revendication 1 comprenant en outre :
une conduite d'alimentation en arôme comportant une soupape anti-retour.

3. Chambre de mélange selon la revendication 1 comprenant en outre :
une conduite d'alimentation en édulcorant comportant une soupape anti-retour.

4. Chambre de mélange selon la revendication 1, la chambre de mélange présentant une longueur telle qu'un temps de séjour de l'eau chaude dans la chambre de mélange, depuis la conduite d'alimentation en eau chaude, est compris entre environ 0,1 et environ 1,5 secondes.

5. Chambre de mélange selon la revendication 4, l'eau chaude ayant un temps de séjour total dans la chambre de mélange et un ensemble de buse ultérieur compris entre environ 0,5 seconde et environ 2 secondes.

6. Machine de distribution de boisson à base de thé comprenant la chambre de mélange de la revendication 1.

7. Chambre de mélange selon la revendication 1, comprenant en outre une seconde soupape anti-retour dans la conduite qui mène à la conduite d'alimentation en eau froide.
